# EUROPÄISCHE PATENTSCHRIFT

(11) **EP 1 192 385 B1**
(45) Veröffentlichungstag und Bekanntmachung des Hinweises auf die Patenterteilung: **25.08.2004**
(21) Anmeldenummer: 00949220.8
(22) Anmeldetag: 28.06.2000
(51) Int. Cl.: F16L 59/14

(54) **FLEXIBLES ROHR ODER FLEXIBLER SCHLAUCH**
FLEXIBLE PIPE OR FLEXIBLE TUBE
TUBE OU TUYAU FLEXIBLE

(30) Priorität: 09.07.1999 DE 19932198
(43) Veröffentlichungstag der Anmeldung: 03.04.2002
(73) Patentinhaber: Alcan Deutschland GmbH, 37075 Göttingen (DE)
(72) Erfinder: WERNER, Friedrich, D-58840 Plettenberg (DE)
(74) Vertreter: HOFFMANN - EITLE
(86) Internationale Anmeldenummer: PCT/EP2000/006034
(87) Internationale Veröffentlichungsnummer: WO 2001/004536

(56) Entgegenhaltungen:
- EP-A- 0 795 710
- DE-B- 1 055 900
- US-A- 5 325 893
- US-A- 5 494 319
- US-A- 5 603 358

## Beschreibung

### Technisches Gebiet

Die Erfindung betrifft ein flexibles Rohr oder einen flexiblen Schlauch nach dem Oberbegriff des Anspruchs 1.

Nachfolgend wird stets auf ein flexibles Rohr bezug genommen, und es sollte verstanden werden, daß hierbei jeweils stets auch solche flexiblen Rohre gemeint sind, die aufgrund eines vergleichsweise kleinen Querschnitts üblicherweise als Schläuche bezeichnet werden würden. Flexible Rohre nach dem Oberbegriff des Anspruchs 1, die eine Innenlage aus einem temperaturbeständigen Material und eine Außenlage aus einem isolierenden Material aufweisen, werden insbesondere für die Führung von Warmluft in Anwendungsfällen benutzt, bei denen ein geringes Gewicht der Luftführungseinrichtungen wesentlich ist. Dies ist beispielsweise bei Wohnwägen, Wohnmobilen und anderen mobilen Einrichtungen der Fall. Hierbei erfüllt die temperaturbeständige Innenlage die Funktion, die warme Luft oder auch ein anderes warmes, gasförmiges Medium durch das Rohr zu leiten, ohne daß das Rohr beschädigt wird. Die wärmeisolierende Außenlage dient dazu, bei einer Berührung mit dem Rohr durch Personen Verbrennungen auszuschließen, bzw. bei Berührung des Rohres mit umgebenden Gegenständen eine Beschädigung dieser Gegenstände durch übermäßige Hitze zu verhindern.

### Stand der Technik

Ein flexibles Rohr ist als Vorbenutzungsgegenstand zur Verwendung beispielsweise in Wohnwägen bekannt und weist als Isolierung überlicherweise drei Lagen aus Papier auf. Das isolierende Papier ist flächig auf die Innenlage aus dem hitzebeständigen Material aufgebracht und isoliert die sich durch die Führung von heißer Luft erwärmende Innenlage insoweit, daß Verbrennungen verhindert werden können.

Die EP-A-0 795 710 offenbart einen flexiblen Schlauch nach dem Oberbegriff des Anspruchs 1 mit einer Innenlage aus einem temperaturbeständigen Material und einer Außenlage aus einem wärmeisolierenden Material, wobei die isolierenden Außenlage mit der Innenlage stellenweise in Berührung ist und im Übrigen von dieser zumindest geringfügig beabstandet ist.

### Darstellung der Erfindung

Der Erfindung liegt die Aufgabe zugrunde, ein in der beschriebenen Weise aufgebautes flexibles Rohr bzw. einen flexiblen Schlauch zu schaffen, das/der hinsichtlich der Wirtschaftlichkeit bei der Herstellung verbessert ist, wobei gleichzeitig die wesentlichen Funktionen des Rohres, nämlich die Führung von heißer Luft oder Gasen und die ausreichende Isolierung zur Umgebung hin aufrechterhalten bleiben müssen.

Die Lösung dieser Aufgabe erfolgt durch das im Patentanspruch 1 beschriebene flexible Rohr bzw. den darin beschriebenen flexiblen Schlauch.

Erfindungsgemäß ist die isolierende Außenlage mit der Innenlage, die bevorzugt aus Aluminiumband oder -folie ausgeführt ist, stellenweise in Berührung und ist im übrigen von dieser zumindest geringfügig beabstandet. Mit anderen Worten weist die isolierende Außenlage hinsichtlich ihrer Mikrostruktur eine derartige Gestalt auf, daß sich eine Berührung mit der bei der Anwendung heißen Innenlage lediglich an zahlreichen diskreten Stellen besteht, und daß zwischen diesen Berührungsstellen ein zumindest geringfügiger Abstand zwischen der heißen Innenlage und der isolierenden Außenlage vorhanden ist. Für das äußere Erscheinungsbild der Außenlage bedeutet dies, daß die Außenlage rauh erscheint, da diese stellenweise geringfügig von der herkömmlichen, vollständig flächigen Berührung mit der Innenlage abgehoben ist und vorsteht. Im übrigen ist die Außenlage jedoch auch bei dem erfindungsgemäßen flexiblen Rohr hinsichtlich seiner Form vollständig an die Innenlage angepaßt.

Die Ausbildung einer zumindest geringfügigen Beabstandung zwischen der Innenlage und der isolierenden Außenlage in den Bereichen zwischen den Berührstellen zwischen den beiden Lagen führt dadurch zu wesentlichen wirtschaftlichen Vorteilen, daß die erforderliche Isolierung mit wesentlich weniger Material erreicht werden kann. Die zwischen der Innenlage und der Außenlage an den voneinander beabstandeten Stellen ausgebildeten kleinen Luftkammern sorgen nämlich für eine bessere Isolierung als das in herkömmlicher Weise in mehreren Lagen flächig auf die Innenlage aufgebrachte Papier. Hierdurch konnte bei Versuchen festgestellt werden, daß eine einzige Lage des isolierenden Außenmaterials, beispielsweise Papier, ausreicht, um die gleiche Isolierwirkung zu erhalten, wie die herkömmlich verwendeten drei Lagen Papier. Mit anderen Worten kann bis zu zwei Drittel des Materials der Außenlage eingespart werden.

Die verbesserte Isolierwirkung bei dem erfindungsgemäß gestalteten flexiblen Rohr wird dadurch unterstützt, daß die Wärme zwischen der Innenlage und denjenigen Bereichen der Außenlage, an denen gegebenenfalls die Berührung mit der Haut oder umliegenden Gegenstände erfolgt, nämlich an den von der Außenlage beabstandeten Stellen, eine besonders weite Strecke zurücklegen muß, so daß sich diejenigen Zonen, die gegebenenfalls in Berührung mit der Haut oder umliegenden Gegenständen kommen, weniger Stark erwärmen. Schließlich wird die Gefahr von Verbrennungen oder Beschädigungen umgebender Gegenstände dadurch verringert, daß die Berührung gegebenenfalls an einer deutlich geringeren Fläche, nämlich lediglich im Bereich derjenigen Stellen, die von der Innenlage beabstandet sind, erfolgt. Hierdurch kann entsprechend der geringeren Berührfläche eine geringere Wärmemenge übertragen werden, so daß die Gefahr von Verbrennungen ausgeschlossen werden kann. Insgesamt sorgt die Erfindung somit für ein flexibles Rohr, das im Hinblick auf den Herstellungsaufwand erheblich verbessert ist, deutlich leichter ausgeführt werden kann und hinsichtlich der Erfüllung der geforderten Funktionen keinerlei Nachteile aufweist.

Das erfindungsgemäße flexible Rohr wird durch spiralförmiges Wickeln derart, daß sich die jeweiligen Randbereiche überlappen und ineinander greifen, hergestellt. Dieses Herstellungsverfahren hat sich für flexible Wickelrohre bewährt und läßt sich auch auf das erfindungsgemäße flexible Wickelrohr mit nur stellenweise mit der Innenlage verbundener Außenlage anwenden. Hierbei kann die Innenlage sowohl aus vorgerilltem Bandmaterial gewickelt werden, als auch aus glattem Bandmaterial, so daß ein glattwandiges Rohr entsteht, das nachfolgend durch Drücken in einem Formwerkzeug gerillt wird.

Bevorzugte Weiterbildungen sind in den weiteren Ansprüchen beschrieben.

Für die konkrete Gestaltung des Materials der Außenlage wird bevorzugt, daß dieses zahlreiche kleine Erhebungen aufweist, an denen die Außenlage von der Innenlage beabstandet ist. Dementsprechend erfolgt in den Zonen zwischen den Erhebungen die Berührung mit der Innenlage. Im Bereich der Erhebungen werden, wie vorangehend beschrieben, die besonders gut isolierenden Luftkammern geschaffen, oberhalb derer sich diejenigen, vergleichsweise kleinen Zonen befinden, an denen man in Berührung mit Außenlage kommen kann, was jedoch Verbrennungen ausschließt.

Für die Gestaltung des Außenlagen-Materials hat es sich als vorteilhaft erwiesen, dieses geprägt oder gekreppt auszubilden. Durch diese Maßnahmen kann bei der Verbindung des Außenlagenmaterials mit dem Innenlagenmaterial besonders einfach die stellenweise Berührung und stellenweise Beabstandung realisiert werden. Beispielsweise weist gekrepptes Material, insbesondere Kreppapier, eine derartige Struktur auf, daß in einem Bereich von beispielsweise einem Millimeter entlang der Oberfläche des Materials einige, beispielsweise zwei bis fünf steg- oder rippenförmige Erhebungen in der Mikrostruktur des Materials ausgebildet sind, so daß eine Berührung mit dem Material der Innenlage nur in den Bereichen zwischen diesen Erhebungen erfolgt. Gleichzeitig sind diese Erhebungen nur in der Größenordnung von zehntel Millimetern hoch, so daß sich insgesamt ein nur geringfügig rauhes Erscheinungsbild der Außenlage ergibt. Eine ähnliche Struktur, die für die erfindungsgemäße teilweise Beabstandung von der Innenlage sorgt, kann durch geeignetes Prägen des Außenlagenmaterials erreicht werden.

Wie vorangehend bereits angedeutet, hat sich Papier, insbesondere Kreppapier als Material für die Außenlage als besonders vorteilhaft herausgestellt.

Wenngleich es in bestimmten Anwendungsfällen erforderlich sein mag, mehrere Lagen des Außenlagenmaterials vorzusehen, wird erfindungsgemäß bevorzugt, eine einzige Lage vorzusehen. Wie erwähnt, kann aufgrund des Grundgedankens der Erfindung in wirtschaftlich besonders vorteilhafter Weise auch bei Verwendung einer einzigen Lage die erforderliche Isolierung gewährleistet werden.

Für die Gestaltung des erfindungsgemäßen flexiblen Rohres wird ferner bevorzugt, daß dieses gerillt ist. Hierdurch läßt sich die Flexibilität des Rohres besonders zuverlässig und umfassend erreichen. Ferner werden diejenigen Zonen, an denen die Haut oder umliegende Gegenstände in Berührung mit der Oberfläche des Rohres kommen können, zusätzlich verringert, weil die Berührung nur im Bereich der Wellenberge erfolgen kann.

Die isolierende Außenlage kann zusammen mit der Innenlage gewickelt werden, oder sie kann nach dem Wickeln des hitzebeständigen Innenrohres gewickelt werden.

Bei der Verwendung von geprägtem oder gekrepptem Papier kann dieses mit einer selbstklebenden Rückseite ausgerüstet sein oder mit einem hitzeaktivierbaren Kleber, der nach dem Verformen aktiviert wird. Es kann aber auch das Papier unmittelbar vor dem Wickeln geprägt oder gekreppt und dann mit einem Kaschierkleber aufgebracht werden. Zu den zuletzt geschilderten Varianten sei angemerkt, daß sich diese sowohl für die Verwendung von vorgerilltem Bandmaterial als auch bei dem Wickeln von glattem Bandmaterial und dem nachfolgenden Drücken in einem Formwerkzeug eignen.

## Patentansprüche

1. Flexibles Rohr oder flexibler Schlauch, insbesondere zur Führung von Warmluft, mit einer Innenlage aus einem temperaturbeständigen Material, insbesondere Aluminium, und zumindest einer Außenlage aus einem wärmeisolierenden Material, wobei die isolierende Außenlage mit der Innenlage stellenweise in Berührung ist und im übrigen von dieser zumindest geringfügig beabstandet ist,
**dadurch gekennzeichnet, dass**
die Innen- und die zumindest eine Außenlage jeweils durch spiralförmiges Wickeln von Bandmaterial derart, dass sich die jeweiligen Randbereiche überlappen und ineinander greifen, ausgebildet sind.

2. Rohr oder Schlauch nach Anspruch 1, **dadurch gekennzeichnet, daß** das Material der Außenlage zahlreiche Erhebungen aufweist, an denen die Außenlage zumindest geringfügig von der Innenlage beabstandet ist.

3. Rohr oder Schlauch nach Anspruch 1 oder 2, **dadurch gekennzeichnet, daß** das Material der Außenlage geprägt oder gekreppt ist.

4. Rohr oder Schlauch nach zumindest einem der voranstehenden Ansprüche, **dadurch gekennzeichnet, daß** das Material der Außenlage Papier ist.

5. Rohr oder Schlauch nach zumindest einem der voranstehenden Ansprüche, **dadurch gekennzeichnet, daß** eine einzige Außenlage vorgesehen ist.

6. Rohr oder Schlauch nach zumindest einem der voranstehenden Ansprüche, **dadurch gekennzeichnet, daß** dieses/dieser gerillt ist.

7. Rohr oder Schlauch nach zumindest einem der voranstehenden Ansprüche, **dadurch gekennzeichnet, dass** die Außenlage hinsichtlich ihrer Form an die Innenlage angepasst ist.

8. Rohr oder Schlauch nach zumindest einem der voranstehenden Ansprüche, **dadurch gekennzeichnet, dass** die Außenlage flächig auf die Innenlage aufgebracht ist.

## Claims

1. Flexible pipe or flexible tube, in particular for carrying hot air, comprising an inner layer of a temperature-resistant material, in particular aluminium, and at least one outer layer of a thermally insulating material, wherein the insulating outer layer in places is in contact with the inner layer and otherwise is at least slightly spaced apart therefrom,
**characterized in that**
the inner layer and the at least one outer layer are formed in each case by spirally winding strip material in such a way that the respective edge regions overlap and intermesh.

2. Pipe or tube according to claim 1, **characterized in that** the material of the outer layer has numerous bumps; at which the outer layer is at least slightly spaced apart from the inner layer.

3. Pipe or tube according to claim 1 or 2, **characterized in that** the material of the outer layer is embossed or crêped.

4. Pipe or tube according to at least one of the preceding claims, **characterized in that** the material of the outer layer is paper.

5. Pipe or tube according to at least one of the preceding claims, **characterized in that** a single outer layer is provided.

6. Pipe or tube according to at least one of the preceding claims, **characterized in that** the pipe or tube is grooved.

7. Pipe or tube according to at least one of the preceding claims, **characterized in that** the outer layer is adapted in terms of its shape to the inner layer.

8. Pipe or tube according to at least one of the preceding claims, **characterized in that** the outer layer is applied flat onto the inner layer.

## Revendications

1. Tube ou tuyau flexible, en particulier pour le guidage d'air chaud, comprenant une couche intérieure à base d'un matériau résistant aux températures élevées, en particulier de l'aluminium, et au moins une couche extérieure à base d'un matériau thermo-isolant, la couche extérieure isolante étant par endroits en contact avec la couche intérieure et étant du reste au moins légèrement espacée de celle-ci.
**caractérisé en ce que** la couche intérieure et la au moins une couche extérieure sont conçues respectivement par un enroulement en forme de spirale de matériau en bande de telle sorte que les zones périphériques respectives se chevauchent et s'emboîtent l'une dans l'autre.

2. Tube ou tuyau selon la revendication 1, **caractérisé en ce que** le matériau de la couche extérieure présente de nombreuses éminences sur lesquelles la couche extérieure est au moins légèrement espacée de la couche intérieure.

3. Tube ou tuyau selon la revendication 1 ou 2, **caractérisé en ce que** le matériau de la couche extérieure est gaufré ou crêpé.

4. Tube ou tuyau selon au moins l'une quelconque des revendications précédentes, **caractérisé en ce que** le matériau de la couche extérieure est du papier.

5. Tube ou tuyau selon au moins l'une quelconque des revendications précédentes, **caractérisé en ce qu'**il est prévu une seule couche extérieure.

6. Tube ou tuyau selon au moins l'une quelconque des revendications précédentes, **caractérisé en ce que** ce tube ou ce tuyau est rainuré.

7. Tube ou tuyau selon au moins l'une quelconque des revendications précédentes, **caractérisé en ce que** la couche extérieure est adaptée à la couche intérieure en ce qui concerne sa forme.

8. Tube ou tuyau selon au moins l'une quelconque des revendications précédentes, **caractérisé en ce que** la couche extérieure est appliquée de façon plané sur la couche intérieure.
